# EUROPEAN PATENT SPECIFICATION

(11) **EP 1 500 290 B1**
(45) Date of publication and mention of the grant of the patent: **06.02.2008**
(21) Application number: 03743431.3
(22) Date of filing: 05.03.2003
(51) Int. Cl.: H04Q 7/34

(54) **TESTING MOBILE TELEPHONE TERMINALS**
PRÜFEN VON MOBILTELEFON-ENDGERÄTEN
ESSAI DE TERMINAUX TELEPHONIQUES MOBILES

(30) Priority: 06.03.2002 GB 0205312
(43) Date of publication of application: 26.01.2005
(73) Proprietor: Aeroflex International Limited, Stevenage, Herts SG1 2AN (GB)
(72) Inventor: Flitton, Gregory Thomas, Bedforshire SG19 2UR (GB)
(74) Representative: Hogg, Jeffery Keith
(86) International application number: PCT/GB2003/000925
(87) International publication number: WO 2003/075590

(56) References cited:
- WO-A-00/51380
- WO-A-99/63764
- US-B1- 6 272 337
- "3GPP; Techmnical Specification Group Terminals; Common Test Environment for User Equipment (UE) Conformance Testing (Release 1999)" 3GPP TS 34.108 V3.5.0, September 2001 (2001-09), XP002242876 Sophia Antipolis FR

## Description

### Technical Field

This invention relates to a method and apparatus for testing a mobile telephone terminal.

Known mobile terminal testers implement most of the communications protocol that a base station would use to communicate with the terminal, and interact with the terminal so as to measure its performance, for example, in terms of bit error rate and modulation quality. These testers are therefore relatively complicated both in terms of their hardware and software. Known testers are disclosed in WO 99/63734 and WO 00/51380.

An object of the invention therefore is to provide a simplified method and apparatus for testing mobile telephone terminals.

### Disclosure of the Invention

This is achieved by the features of respective independent claims 1 and 11. The present invention involves using a predetermined transmitted data pattern to trigger a response, preferably, an access request, from the terminal, and analysing the response to assess the performance of the terminal without responding to the terminal. The test apparatus does not therefore need to incorporate the associated hardware or software.

The invention will now be described by way of example with reference to the accompanying drawings, in which:

### Description of the Drawings

Figure 1 illustrates a conventional mobile ratio test set;
Figure 2 illustrates a test set according to the invention; and
Figure 3 illustrates an alternative embodiment of the invention.

### Embodiments of the Invention

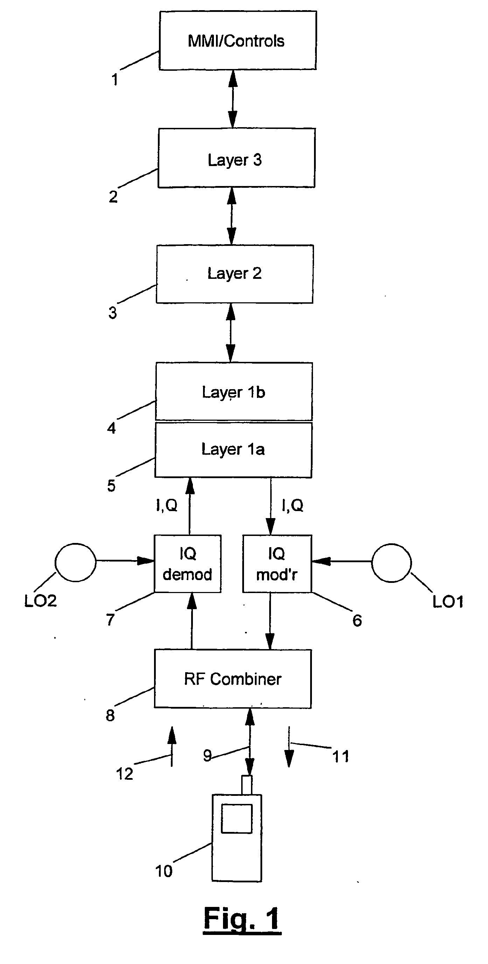

The architecture required for a conventional mobile radio test set, as illustrated in Figure 1, comprises the following:
1. The MMI at the top of the tree: This usually includes some form of display to inform the user of the current instrument and test status. Keys allow the user to implement the chosen test.
2. Layer 3 protocol: This layer forms messages for the mobile and interprets messages from the mobile.
3. Layer 2 protocol: This layer's job is to ensure reliable transmission and reception of messages from/to Layer 3. For example, when sending a message to the mobile a response is usually made. If Layer 2 does not hear this response it will retransmit the message, on the assumption that the original transmission was not successful.
4. Layer 1b protocol: A subset of Layer 1. On the downlink this layer takes the Layer 2 blocks and applies channel encoding to aid successful transmission on the air interface. On the uplink the reverse happens and channel decoding is used to reveal the Layer 2 message from the mobile.
5. Layer la protocol (a subset of Layer 1): On the downlink this layer takes the binary information from Layer 1b and modulates it to give baseband I and Q samples. For the uplink this layer receives IQ samples and demodulates them back to binary values.
6. IQ modulator: On the downlink this takes the baseband IQ generated by Layer 1 and forms a signal at the correct carrier frequency using a local oscillator L01.
7. IQ demodulator: The reverse of the IQ modulator - it takes the modulated carrier and derives IQ at baseband using a local oscillator L02.
8. RF combiner where RF transmit/receive paths are combined into a single connection 9 of the antenna of the mobile telephone.

When a mobile 10 is first connected to the test set, there needs to be a signal that it can recognise. For GSM this takes the form of the Broadcast Control Channel (BCCH) in the downlink 11. There are a number of constituent elements to this channel:
(a) Frequency Control Channel (FCCH)
(b) Synchronisation Channel (SCH)
(c) System Information Messages

The mobile 10 uses the FCCH and SCH to synchronise to the test set emulation of a basestation, allowing it to demodulate and interpret the System Information Messages. Once it has done this, it may attempt to register with the test set. This registration process is initiated by the mobile 10 when it sends an Access burst on the Random Access Channel on the uplink 12. The test set demodulates the Access burst and responds. A brief series of messages pass between the test set and mobile as they exchange and verify system information.

Once a mobile 10 is registered, it is then possible to initiate a call to/from the mobile which will allow parametric tests of the mobile's transmitter and receiver.

The need to interact in real-time with the mobile leads to a complicated software/hardware architecture.

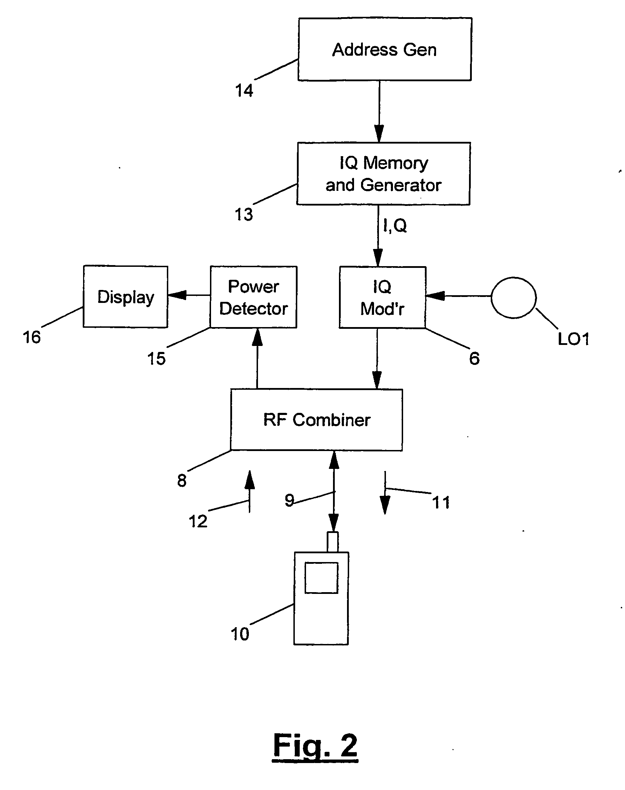

The invention simplifies the test set architecture by appreciating that a considerable amount of testing can be done by simply getting the mobile 10 to send an Access burst on the Random Access Channel. The invention achieves this with the architecture as illustrated in Figure 2.

The IQ modulator 6 remains with its associated Local Oscillator (LO1), but the IQ data applied to it is no longer coming from a conventional Layer 1, 2, 3 architecture. Instead, a fixed Broadcast Control Channel is stored in a memory 13 as IQ samples. These are clocked out by an address generator 14 and applied to the IQ modulator 6.

Alternatively, the predetermined pattern may be generated using a subset of the protocol stack 2 to 5, for example, stored data symbols may be processed by a baseband modulator, which is a subset of Layer 1a, before being applied to the IQ modulator 6.

The mobile 10 responds to the fixed BCCH by sending an Access burst but it does not get a reply. The test set uses a power detector 15 to determine whether the mobile makes a transmission and this may be indicated to the user on a display 16. The power detector 15 may simply determine whether or not the transmission power is above a threshold level or may determine the actual transmission power level and report this to the display 16.

Alternatively, the access burst may be captured by a radio frequency receiver and analysed. The analysis may determine modulation quality, such as vector value, and report this or a comparison with allowable limits; or the analysis may determine spectral characteristics, such as adjacent channel power, occupied bandwidth and spurious signals, and report this or the comparison with allowable limits; or the analysis may determine the power envelope against time and compare this with a mask defining upper and lower allowable limits.

When the mobile 10 fails to get a reply to its Access burst it will try again a number of times, before searching for another signal.

The information in the stored BCCH tells the mobile the power level at which to transmit its Access burst, and the number of burst retries to perform. So, a number of different BCCH can be stored and selected to test the mobile's power level control.

Placing an attenuator in the downlink would vary the output level from the test set to the mobile. This allows measure of sensitivity - slowly lowering the output power until the mobile no longer transmits Access bursts.

The test set may be connected directly to an antenna connector on the mobile phone 10 using a cable 9, as in the prior art of Figure 1.

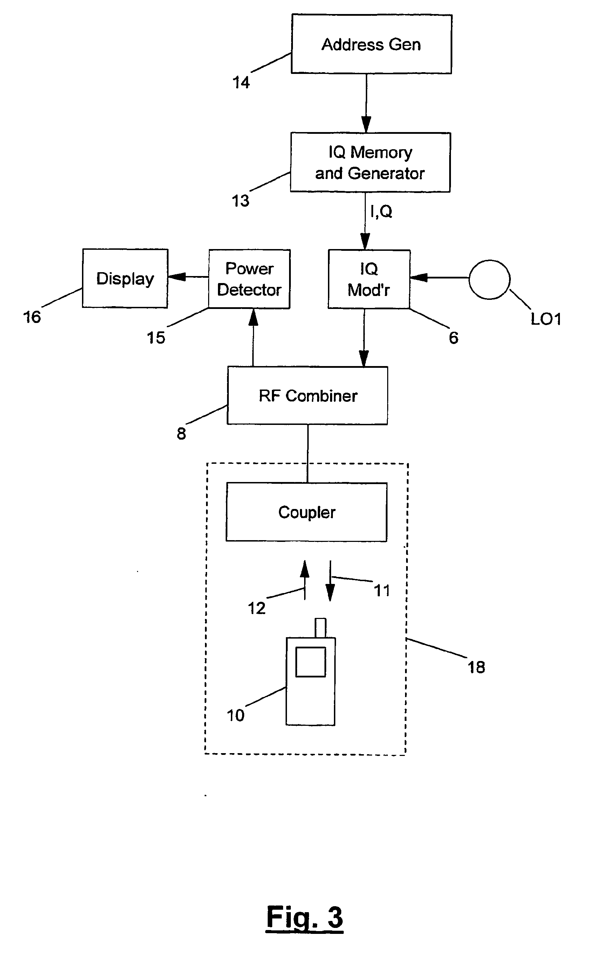

An alternative option, rather than cable connection 9 between the test set and the mobile, is to use a coupler 17, as illustrated in Figure 3.

The coupler 17 makes a connection to the mobile 10 over the air interface rather than through a piece of cable. As such, the coupler 17 and mobile 10 may need to be screened from other signals as shown by screening 18 in Figure 3. This makes sure that the mobile can only hear the test set signal. This approach then allows the test set to verify that the mobile's antenna is functioning correctly.

Thus, comparing the invention with the conventional test sets, the use of a stored downlink data pattern (BCCH) instead of a complete protocol stack, requires a lot less software development and does not require the complex signal processing hardware of conventional test sets.

The test set according to the invention is simpler, cheaper and more robust which makes it suitable for widespread use, for example, in retail outlets which sell mobile telephones. The retail outlets can then check a mobile to see if it is faulty before returning it to a more expensive repair centre.

The invention has been described above with reference GSM, but there are no reasons why the invention is not applicable to other systems such as Wideband CDMA.

## Claims

1. A method of testing a mobile telephone terminal (10) comprising the steps of transmitting to the terminal on a downlink (11) a predetermined data pattern (13) which it will recognise and which will prompt it to transmit an access request on an uplink (12), and **characterised by** receiving the access request and analysing it (15) to assess the performance of the terminal, the assessment of performance of the terminal being based upon assessment of the access request only.

2. A method as claimed in claim 1 in which multiple predetermined data patterns are provided for testing the terminal under different operating conditions, each data pattern prompting a different response from the terminal in transmitting an access request.

3. A method as claimed in claim 2 in which said multiple predetermined data patterns are such that they each prompt the terminal to transmit an access request at a different power level.

4. A method as claimed in claim 2 or 3 in which said multiple predetermined data patterns are such that they each specify a different maximum number of times the terminal should send an access request if it receives a response to none of them.

5. A method as claimed in any one of the preceding claims in which said predetermined data pattern is transmitted multiple times at different power levels and the response of the terminal analysed to determine a threshold at which it fails to transmit an access request.

6. A method as claimed in any one of the preceding claims in which said predetermined data pattern is transmitted to the terminal on a cable connection.

7. A method as claimed in any one of claims 1 to 5 in which said predetermined data pattern is transmitted to the terminal over an air interface.

8. A method as claimed in claim 7 in which the air interface is screened from other signals.

9. A method as claimed in any of the preceding claims in which the access request is analysed by a power measurement.

10. A method as claimed in any one of claims 1 to 8 in which the access request is analysed by a modulation quality measurement.

11. Test apparatus for testing a mobile telephone terminal (10) comprising a memory (13) for storing a predetermined data pattern, and a generator for generating a signal corresponding to said predetermined data pattern on a downlink, said signal being adapted to be recognisable by the terminal (10) and to trigger it to transmit an access request on an uplink (12), and **characterised by** the provision of a detector (15) for detecting and analysing said access request to assess the performance of the terminal, the apparatus being adapted so that the assessment of performance of the terminal is based upon assessment of the access request only.

12. Test apparatus as claimed in claim 11 in which the memory (13) stores multiple predetermined data patterns for testing the terminal under different operating conditions of transmission power level and/or maximum number of access requests to be transmitted if there is no response to any of them.

13. Test apparatus as claimed in claim 11 or 12 further comprising means to vary the power level at which said signal is transmitted on the downlink so that the response of the terminal at different broadcast power levels can be detected.

14. Test apparatus as claimed in any one of claims 11 to 13 which is connected to the terminal to transmit said signal on the downlink by a cable connection or an air interface.

15. Test apparatus as claimed in any of claims 11 to 14 in which the detector (15) is adapted to analyse the access request by making a power measurement.

16. Test apparatus as claimed in any of claims 11 to 14 in which the detector (15) is adapted to analyse the access request by making a modulation quality measurement.

## Patentansprüche

1. Verfahren zum Prüfen eines Mobiltelefon-Endgeräts (10) mit folgenden Schritten: Übertragen zum Endgerät auf einer Abwärtsstrecke (11) eines vorbestimmten Datenmusters (13), das es erkennen wird und das es zum Übertragen einer Zugriffsanforderung auf einer Aufwärtsstrecke (12) veranlaßt, und **gekennzeichnet durch** Empfangen der Zugriffsanforderung und Auswerten derselben (15) zum Bewerten der Leistung des Endgeräts, wobei die Bewertung der Leistung des Endgeräts auf Bewertung nur der Zugriffsanforderung basiert.

2. Verfahren nach Anspruch 1, wobei mehrere vorbestimmte Datenmuster zum Prüfen des Endgeräts unter unterschiedlichen Betriebsbedingungen bereitgestellt werden, wobei jedes Datenmuster eine unterschiedliche Reaktion von dem Endgerät bei der Übertragung einer Zielzugriffsanforderung veranlaßt.

3. Verfahren nach Anspruch 2, wobei die mehreren vorbestimmten Datenmuster derart sind, daß sie jeweils das Endgerät zum Übertragen einer Zugriffsanforderung auf einem unterschiedlichen Leistungspegel veranlassen.

4. Verfahren nach Anspruch 2 oder 3, wobei die mehreren vorbestimmten Datenmuster derart sind, daß sie jeweils eine unterschiedliche Höchstzahl von Malen angeben, die das Endgerät eine Zugriffsanforderung senden sollte, wenn es eine Antwort auf keine von ihnen empfängt.

5. Verfahren nach einem beliebigen der vorhergehenden Ansprüche, wobei das vorbestimmte Datenmuster mehrere Male auf unterschiedlichen Leistungspegeln übertragen wird und die Reaktion des Endgeräts zum Bestimmen eines Schwellwerts ausgewertet wird, bei dem es nicht mehr eine Zugriffsanforderung überträgt.

6. Verfahren nach einem beliebigen der vorhergehenden Ansprüche, wobei das vorbestimmte Datenmuster auf einer Kabelverbindung zu dem Endgerät übertragen wird.

7. Verfahren nach einem beliebigen der Ansprüche 1 bis 5, wobei das vorbestimmte Datenmuster über eine Luftschnittstelle zum Endgerät übertragen wird.

8. Verfahren nach Anspruch 7, wobei die Luftschnittstelle gegen andere Signale abgeschirmt ist.

9. Verfahren nach einem beliebigen der vorhergehenden Ansprüche, wobei die Zugriffsanforderung durch eine Leistungsmessung ausgewertet wird.

10. Verfahren nach einem beliebigen der Ansprüche 1 bis 8, wobei die zugriffsanforderung durch eine Modulationsgütemessung ausgewertet wird.

11. Prufvorrichtung zum Prüfen eines Mobiltelefonendgeräts (10) mit einem Speicher (13) zum Speichern eines vorbestimmten Datenmusters, und einem Generator zum Erzeugen eines dem vorbestimmten Datenmuster entsprechenden Signals auf einer Abwärtsstrecke, wobei das Signal durch das Endgerät (10) erkennbar ist und es zum Übertragen einer Zugriffsanforderung auf einer Aufwärtsstrecke (12) triggern kann, und **gekennzeichnet durch** die Bereitstellung eines Detektors (15) zum Erkennen und Auswerten der Zugriffsanforderung zum Bewerten der Leistung des Endgeräts, wobei die Vorrichtung so ausgebildet ist, daß die Bewertung von Leistung des Endgeräts auf Bewertung nur der Zugriffsanforderung basiert.

12. Prüfvorrichtung nach Anspruch 11, wobei der Speicher (13) mehrere vorbestimmte Datenmuster zum Prüfen des Endgeräts unter unterschiedlichen Betriebsbedingungen von Übertragungsleistungspegel und/oder Höchstzahl von Zugriffsanforderungen speichert, die zu übertragen sind, wenn es auf keine von ihnen eine Antwort gibt.

13. Prüfvorrichtung nach Anspruch 11 oder 12, weiterhin mit Mitteln zum Verändern des Leistungspegels, mit dem das Signal auf der Abwärtsstrecke übertragen wird, so daß die Reaktion des Endgeräts auf unterschiedlichen Rundsendungsleistungspegeln erkannt werden kann.

14. Prüfvorrichtung nach einem der Ansprüche 11 bis 13, die mit dem Endgerät zum Übertragen des Signals auf der Abwärtsstrecke durch eine Kabelverbindung oder eine Luftschnittstelle verbunden ist.

15. Prüfvorrichtung nach einem der Ansprüche 11 bis 14, wobei der Detektor (15) zum Auswerten der Zugriffsanforderung durch Durchführung einer Leistungsmessung ausgebildet ist.

16. Prüfvorrichtung nach einem der Ansprüche 11 bis 14, wobei der Detektor (15) zum Auswerten der Zugriffsanforderung durch Durchführung einer Modulationsgütemessung ausgebildet ist.

## Revendications

1. Procédé de test d'un terminal de téléphonie mobile (10) comprenant l'étape consistant à transmettre au terminal, sur une liaison descendante (11), un modèle de données prédéterminé (13) qu'il reconnaîtra et qui l'invitera à transmettre une demande d'accès sur une liaison montante (12), et **caractérisé par** l'étape consistant à recevoir la demande d'accès et à l'analyser (15) pour évaluer les performances du terminal, l'évaluation des performances du terminal se fondant uniquement sur l'évaluation de la demande d'accès.

2. Procédé selon la revendication 1, dans lequel plusieurs modèles de données prédéterminés sont prévus pour tester le terminal dans différentes conditions de fonctionnement, chaque modèle de données invitant à une réponse différente du terminal lorsqu'il transmet une demande d'accès.

3. Procédé selon la revendication 2, dans lequel lesdits différents modèles de données prédéterminés sont tels qu'ils invitent chacun le terminal à transmettre une demande d'accès à un niveau de puissance différent.

4. Procédé selon la revendication 2 ou 3, dans lequel lesdits différents modèles de données prédéterminés sont tels qu'ils spécifient chacun un nombre de fois maximal différent que le terminal devrait envoyer une demande d'accès en cas de non réponse pour chacune d'elles.

5. Procédé selon l'une quelconque des revendications précédentes, dans lequel ledit modèle de données prédéterminé est transmis plusieurs fois à différents niveaux de puissance et la réponse du terminal est analysée pour déterminer un seuil auquel il ne réussit pas à transmettre une demande d'accès.

6. Procédé selon l'une quelconque des revendications précédentes, dans lequel ledit modèle de données prédéterminé est transmis au terminal sur une connexion par câble.

7. Procédé selon l'une quelconque des revendications 1 à 5, dans lequel ledit modèle de données prédéterminé est transmis au terminal sur une interface radio.

8. Procédé selon la revendication 7, dans lequel l'interface radio est protégée des autres signaux.

9. Procédé selon l'une quelconque des revendications précédentes, dans lequel la demande d'accès est analysée par une mesure de puissance.

10. Procédé selon l'une quelconque des revendications 1 à 8, dans lequel la demande d'accès est analysée par une mesure de qualité de modulation.

11. Appareil de test d'un terminal de téléphonie mobile (10) comprenant une mémoire (13) pour stocker un modèle de données prédéterminé, et un générateur pour générer un signal correspondant audit modèle de données prédéterminé sur une liaison descendante, ledit signal étant adapté pour pouvoir être reconnu par le terminal (10) et pour l'amener à transmette une demande d'accès sur une liaison montante (12), et **caractérisé par le fait qu'**il est prévu un détecteur (15) pour détecter et analyser ladite demande d'accès pour évaluer les performances du terminal, l'appareil étant adapté pour que l'évaluation des performances du terminal se fonde uniquement sur l'évaluation de la demande d'accès.

12. Appareil de test selon la revendication 11, dans lequel la mémoire (13) stocke plusieurs modèles de données prédéterminés pour tester le terminal dans différentes conditions de fonctionnement, en termes de niveau de puissance de transmission et/ou de nombre maximal de demandes d'accès à transmettre en cas de non réponse pour chacune d'elles.

13. Appareil de test selon la revendication 11 ou 12, comprenant, en outre, des moyens pour faire varier le niveau de puissance auquel ledit signal est transmis sur la liaison descendante de telle sorte que la réponse du terminal à différents niveaux de puissance de diffusion puisse être détectée.

14. Appareil de test selon l'une quelconque des revendications 11 à 13, qui est connecté au terminal pour transmettre ledit signal sur la liaison descendante par une connexion par câble ou par une interface radio.

15. Appareil de test selon l'une quelconque des revendications 11 à 14, dans lequel le détecteur (15) est adapté pour analyser la demande d'accès en effectuant une mesure de puissance.

16. Appareil de test selon l'une quelconque des revendications 11 à 14, dans lequel le détecteur (15) est adapté pour analyser la demande d'accès en effectuant une mesure de qualité de modulation.
